(19) Europäisches Patentamt / European Patent Office / Office européen des brevets

(11) **EP 2 988 946 B1**

(12) **EUROPEAN PATENT SPECIFICATION**

(45) Date of publication and mention
of the grant of the patent:
**16.08.2017 Bulletin 2017/33**

(21) Application number: **14718572.2**

(22) Date of filing: **16.04.2014**

(51) Int Cl.:
***B41M 5/00*** *(2006.01)*

(86) International application number:
**PCT/EP2014/057763**

(87) International publication number:
**WO 2014/173763 (30.10.2014 Gazette 2014/44)**

(54) **METHOD OF PRINTING**

DRUCKVERFAHREN

PROCÉDÉ D'IMPRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2013 EP 13165155**

(43) Date of publication of application:
**02.03.2016 Bulletin 2016/09**

(73) Proprietor: **OCE-Technologies B.V.
5914 CA Venlo (NL)**

(72) Inventors:
• **WILLEMS, Guido G.
NL-5921 VS Venlo (NL)**
• **LENDERS, Johan P.J.
NL-6092 NC Leveroy (NL)**

(74) Representative: **OCE IP Department
St. Urbanusweg 43
5914 CA Venlo (NL)**

(56) References cited:
**EP-A1- 2 227 075     WO-A1-2004/113082
US-A1- 2004 055 698**

EP 2 988 946 B1

## Description

FIELD OF THE INVENTION

The present invention relates to a method of printing, in particular inkjet printing, of an aqueous ink composition on a recording substrate.

BACKGROUND ART

The art of inkjet printing, in particular aqueous inkjet printing, printing systems and aqueous inkjet inks is extensively described in the prior art.

For example WO 2011/021591 discloses an inkjet ink containing a water-dispersible colorant, a water-soluble organic solvent, a surfactant, a penetrant and water.

Inkjet inks comprising dispersed polymer particles, i.e. latex inks, are also known in the art. Such inks are known for their ability to improve the print quality and robustness of prints made with such inks.

For example EP 2 233 309 A2 discloses an ink composition containing water in an amount of 20-90 weight% based on the total weight of the ink, a pigment and a resin, which may be a water dispersed resin (i.e. a latex). Both mentioned prior art documents disclose methods for printing said inks onto media normally used in process printing or offset printing (e.g. machine coated (MC) or offset coated media).

It is however a disadvantage of conventional aqueous (latex) inkjet printing that printing with a satisfactory print quality and robustness is limited to certain types of recording substrates. In many cases dedicated inkjet coated media are required to obtain a desired print quality level. Therefore, until recently, application of inkjet technology was limited.

In highly productive printing processes it is desired to be able to print on a wide range of recording substrates, in particular on offset coated (machine coated) media.

A problem of printing a latex ink composition on any sort of recording substrate, in particular offset coated media, is that there may be an imbalance between spreading of an ink droplet that has landed on the surface of a recording substrate, absorption of ink components into the recording substrate and pinning (i.e. fixation or immobilization) of the colorants present in the ink compositions on the recording substrate. Moreover, the balance between spreading, absorption and pinning may be dependent on the type of recording substrate used. The imbalance between spreading, absorption and pinning may result in insufficient dotgain (i.e. the ratio of the diameter of a printed dot on a recording substrate and the diameter of an ink droplet in air).

Insufficient dotgain may lead to visible white marks on the print (in a single pass printing process visible as white lines, also termed streakiness of the print). Insufficient dotgain may be caused by insufficient spreading of an ink droplet and/or (too) fast absorption and/or (too) fast fixation of at least a fraction of the ink droplet. In case a non-absorbing recording substrate is used, the dotgain may be determined by spreading and pinning.

On the other hand, slow or no pinning of the ink may lead to print artifacts such as feathering, bleeding and mottle, which can be seen as ill defined dot edges or boundaries.
Spreading, absorption and pinning may be considered to be counteracting mechanisms in obtaining a desired dotgain: more spreading generally leads to an increase of the dotgain; fast absorption and/or pinning generally stops the spreading and limits the dotgain.

In general, the spreading of a liquid on a substrate can be improved by maximizing the difference between the surface energy of the substrate and the surface tension of the ink. In the context of the present invention, the surface energy of the substrate is also termed the surface tension of the substrate. Both parameters have the same unit: the SI unit of surface energy is $J/m^2$, which is $N*m/m^2 = N/m$. N/m is the unit of surface tension.

Conventional optimizations were carried out with respect to decreasing the surface tension of the ink. Besides the technical limits to this approach, a low surface tension of the inks may lead to increased absorption rates of the inks into at least partly porous substrates. As described above, absorption may act as a break on spreading because the ink thickens due to absorption and hence leading to a limited dotgain.

Another way of maximizing the difference between the surface tension (energy) of the substrate and the surface tension of the ink is to increase the surface tension of the substrate, in particular by pre-treating the substrate prior to printing.

Media pre-treatment with a pre-treatment liquid is known from the prior art, for example US 7,172,275. A pre-treatment liquid may comprise (organic) acids and/or salts, in particular multivalent metal salts, to enhance destabilization of the ink composition and hence enhance pinning of the ink.

It is a disadvantage of the disclosed pre-treatment method that pre-treated substrates need to be dried prior to printing. This requires a lot of energy and may cause the substrates to show deformations prior to (and also after) printing, in particular when drying of pre-treated substrates needs to be performed relatively quickly, such as in a high speed printing process.

EP 2 227 075 A1 discloses a method for forming a metallic pattern, which is provided with a printing process to print a pattern portion on a substrate by means of an inkjet method utilizing ink containing a precursor of a nonelectric plating catalyst and a plating process to form a metallic pattern by nonelectric plating on said pattern portion, wherein the surface of said substrate is constituted of ink non-absorptive resin and has been subjected to a plasma treatment, and said ink has a pH value at 25°C of not less than 9.0.

It is an object of the present invention to provide a printing method solving or at least mitigating the above stated disadvantages. Such a method balances the time scale for spreading of ink droplets, the time scale of absorption of ink components into the recording substrate and the time scale of pinning of the colorants present in the ink composition, such that the dotgain can be controlled on a wide range of recording substrates.

It is another object of the present invention to provide an ink composition for use in such a method.

It is another object of the present invention to provide a printing system capable of performing the method according to the present invention.

SUMMARY OF THE INVENTION

The objects are at least partially achieved by providing a method of printing an aqueous ink on a recording substrate; the aqueous ink composition comprises particles of a water dispersible colorant and has a pH of between 8 and 12; the method comprising the steps of:

  a) pretreating the recording substrate by at least partial acidification of the recording substrate, the at least partial acidification being performed by subjecting the recording substrate to a gaseous acid or by subjecting the recording substrate to a plasma treatment;
  b) imagewise printing the ink composition on the pretreated recording substrate.

Without wanting to be bound to any theory, it is believed that with acidifying the print substrate an increased surface energy to the surface of the recording substrate and hence an improved dot spreading is provided. The difference between the surface tension of the recording substrate and the ink composition is a driving force for spreading. The larger said difference is, the faster printed ink droplets will spread (assuming similar other properties, such as the same viscosity of the ink composition). The acidification of the recording substrate may provide acidic groups at the surface of the recording substrate.

The acidic nature of the surface of the recording substrate may provide a destabilizing effect to the dispersed particles (e.g. latex particles and/or dispersed colorant (e.g. pigment) particles) present in the alkaline stabilized ink composition used in a printing method according to the present invention.

Pinning of dispersed colorant particles may occur upon contact of the ink composition with the surface of the recording substrate.

The method according to the present embodiment has the additional advantage that the pretreatment step a) is a contactless treatment method. Certain print artifacts induced by a contact between a pretreatment apparatus and the print substrate, e.g. wheel or roll imprints, may thus be prevented.

Alkaline ink compositions may have a pH of above 7, in particular between 7.5 and 14, preferably between 8 and 12. Alkaline ink compositions have excellent dispersion stability (dispersed pigments and polymer particles).

Upon landing on the acidified recording substrate, the ink composition starts to neutralize, i.e. the pH in the ink droplet starts to decrease. At a certain pH, the dispersion becomes unstable and coagulation of the dispersed latex particles and/or dispersed colorant particles may occur.

The time scale for neutralization of the ink composition may be tuned to the spreading behavior of the ink composition on a wide range of recording substrates.

In an embodiment of the method according to the present invention, the substrate comprises an at least partly porous structure. In this embodiment, the acidification of the recording substrate may provide acidic groups at the surface of the recording substrate and at the internal surface of the porous structure. For example if the recording substrate comprises a cellulosic base paper, acidic groups may be formed on the cellulosic fibers comprised in the base paper by pretreating the recording substrate with a method according to the present invention.

The acidic nature of the surface of the recording substrate and of the internal surface of the porous structure may provide a destabilizing effect to the dispersed particles (e.g. latex particles and/or dispersed colorant (e.g. pigment) particles) present in the alkaline stabilized ink composition used in a printing method according to the present invention. An advantage of the present embodiment is that pinning of dispersed particles that have penetrated into the porous structure of the recording substrate may occur upon contact with the acidified internal surface of the porous structure.

In an embodiment of the method according to the present invention, the recording substrate is selected from the group consisting of plain papers, machine coated papers and gloss coated papers.

In an embodiment of the method according to the present invention, the aqueous ink additionally comprises particles of a water dispersible polymer. Such inks are also termed latex inks or resin emulsion inks.

In an embodiment of the method according to the present invention, the aqueous ink composition comprises a water soluble organic solvent.,

In an embodiment of the method according to the present invention, the ink composition has a pH of between 8.5 and 11.5, preferably between 9 and 11.

In an embodiment of the method according to the present invention, the ink is buffered at a pH of between 8 and 12, preferably between 8.5 and 11.5, more preferably between 9 and 11.

In the context of the present invention, the term buffered means that a weak acidic or alkaline component is present in the ink composition. The presence of such a component reduces the pH change of the ink composition upon adding a (small amount of) a base or an acid to the ink composition or by diluting the ink composition, relative to the pH change of the same ink composition in the absence of the weak acidic or alkaline component.

It is an advantage of the present embodiment that the timescale of destabilization of the alkaline stabilized ink composition upon contact with the acidified recording substrate can be suitably tuned: it may take a longer time for the ink to reach the pH at which destabilization of the dispersed particles (e.g. latex particles and/or dispersed colorant particles) to destabilize and coagulate. The timescales for spreading and pinning may therefore be tuned more independently of one another (to a certain extent) and for a wide range of recording substrates.

In an embodiment of the method according to the present invention, the aqueous ink composition is buffered by a weak organic base being comprised in the ink composition.

In an embodiment of the method according to the present invention, the aqueous ink composition comprises an organic amine, preferably selected from the group consisting of ammonia, alkylamines and alkanolamines.

Examples of the amines include monoethanolamine (bp 170°C), dimethanolamine (bp 268°C), triethanolamine (bp 360°C), N,N-dimethylmonoethanolamine (bp 139°C), N-methyldiethanolamine (bp 243°C), N-methylethanolamine (bp 159°C), N-phenylethanolamine (bp 282°C-287°C), 3-aminopropyl diethylamine (bp 169°C), N-ethyldiethanolamine, N,N-diethylmonoethanolamine, tripropanolamine, 2-amino-2-methyl-1-propanol, N-ethyl-monoethanolamine, N,N-di-n-butylmonoethanolamine, diisopropanolamine, N-n-butylmonoethanolamine, N-n-butyldiethanolamine and diglycolamine.

In an embodiment of the method according to the present invention, the aqueous ink composition comprises a water soluble salt, preferably a water soluble inorganic metal salt.

It is an advantage of the present embodiment that the timescale of destabilization of the alkaline stabilized ink composition upon contact with the acidified recording substrate can be suitably tuned: the salts are inactive in the alkaline ink and upon neutralization of the alkaline ink on the acidic recording substrate the salt may become active and induce destabilization of the dispersed particles (e.g. latex particles and/or dispersed colorant particles), hence the speed of pinning the dispersed colorant to the recording substrate and destabilization of the latex particles may be increased.

The timescales for spreading and pinning may therefore be tuned more independently of one another (to a certain extent) and for a wide range of recording substrates.

In an embodiment of the of the method according to the present invention the salt is a water soluble metal salt comprising metal cation including $Na^+$, $K^+$, $Li^+$, $Sr^{2+}$, $Ca^{2+}$, $Cu^{2+}$, $Ni^{2+}$, $Mg^{2+}$, $Zn^{2+}$, $Ba^{2+}$, $Al^{3+}$, $Fe^{3+}$, $Cr^{3+}$, wherein $Na^+$, $K^+$, $Sr^{2+}$, $Zn^{2+}$, $Al^{3+}$ are preferred cations.

In an embodiment of the method according to the present invention, the salt is an amphoteric metal salt, preferably comprising a metal cation selected from $Zn^{2+}$ and $Al^{3+}$.

In an embodiment, the water soluble metal salt comprises an anion selected from the group consisting of $Cl^-$, $NO_3^-$, $I^-$, $Br^-$, $ClO_3^-$ and $CH_3COO^-$.

The salt, in particular a monovalent metal salt, enhances/assists the destabilization of dispersed polymer particles and/or dispersed colorant particles, once the salt becomes active at low pH. Thus, within the ink (alkaline, high pH), the salt is inactive.

In an embodiment of the method according to the present invention the gaseous acid may be any acid that can be volatized including : hydrogen chloride, hydrogen nitrate, acetic acid, formic acid and lactic acid. In this embodiment, the acidification is achieved with a contactless and dry technique.

In an embodiment of the present invention the at least partial acidification is performed by subjecting the recording substrate to a plasma treatment, the plasma treatment being an air plasma treatment, preferably at atmospheric conditions.

In this embodiment, the acidification is achieved with a contactless and dry technique.

BRIEF DESCRIPTION OF THE DRAWINGS

The present invention will become more fully understood from the detailed description given herein below and accompanying schematical drawings which are given by way of illustration only and are not limitative of the invention, and wherein:

Fig. 1 shows a schematic representation of an inkjet printing system.

Fig. 2 shows a schematic representation of an inkjet marking device: A) and B) assembly of inkjet heads; C) detailed view of a part of the assembly of inkjet heads.

Fig. 3 shows a side view of a plasma treatment device suitable for use in a method according to the present invention.

Fig. 4 shows a graph of the spreading behavior of three inks according to an embodiment of the present invention as a function of the corona dosage.

Fig. 5 shows spreading behavior of water and an ink as a function of corona dosage (curves 4 and 5) and the pH of the recording substrate as a function of corona dosage (curve 6).

DETAILED DESCRIPTION

**Recording substrates**

Suitable recording substrates for use in a printing process using an ink or set of inks (Cyan, Magenta, Yellow and blacK, CMYK) according to the present invention are not particularly limited to any type. The recording substrate may be suitably selected depending on the intended application.
Suitable recording substrates may range from strongly water absorbing media such as plain paper (for example Océ Red Label) to non-water-absorbing media such as plastic sheets (for example PE, PP, PVC and PET films). To optimize print quality, inkjet coated media are known, which media comprise a highly water absorbing coating.
Of particular interest in the context of the present invention are Machine Coated (MC) media (also known as offset coated media) and glossy (coated) media. MC media are designed for use in conventional printing processes, for example offset printing and show good absorption characteristics with respect to solvents used in inks used in such printing processes, which are usually organic solvents. MC and glossy media show inferior absorption behavior with respect to water (worse than plain paper, better than plastic sheets), and hence aqueous inks.
Examples of commercially available Machine Coated media are:

- Hello gloss (Magno Star produced by Sappi);
- DFG (Digifinesse gloss, obtained from UPM);
- TC+ (Top Coated Plus Gloss obtained from Océ);
- TCP Gloss (Top Coated Pro Gloss obtained from Océ);
- Hello Matt (Magno Matt produced by Sappi);
- TCproS (Top Coated Pro Silk obtained from Océ);
- MD (MD1084 obtained from Mitsubishi).

Examples of commercially available uncoated papers are:

- Sopercet premium Preprint (obtained from Soporcel);
- Red label (obtained from Océ);
- Black label (obtained from Océ);
- Topcolour paper (obtained from Océ).

**Ink composition**

An ink composition for use in a printing method according to the present invention is an aqueous ink composition comprising particles of a water dispersible colorant and having a pH of between 8 and 12. The ink composition optionally comprises a water-dispersible resin, a cosolvent, a surfactant and other additives. The components of the inks will be described in detail in the next sections.

Water-Dispersible Colorant

A water-dispersible colorant may be a pigment or a mixture of pigments, a dye or a mixture of dyes or a mixture comprising pigments and dyes, as long as the colorant is water-dispersible.
Examples of the pigment usable in the present invention include those commonly known without any limitation, and either a water-dispersible pigment or an oil-dispersible pigment is usable. For example, an organic pigment such as an insoluble pigment or a lake pigment, as well as an inorganic pigment such as carbon black, is preferably usable.

Examples of the insoluble pigments are not particularly limited, but preferred are an azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, or diketopyrrolopyrrole dye.

For example, inorganic pigments and organic pigments for black and color inks are exemplified. These pigments may be used alone or in combination.

As the organic pigments, it is possible to use azo pigments (including azo lake, insoluble azo pigments, condensed pigments, chelate azo pigments and the like), polycyclic pigments (e.g., phthalocyanine pigments, perylene pigments, perynone pigments, anthraquinone pigments, quinacridone pigments, dioxazine pigments, indigo pigments, thioindigo pigments, isoindolinone pigments, and quinophthalone pigments), dye chelates (e.g., basic dye type chelates, and acidic dye type chelates), nitro pigments, nitroso pigments, aniline black. Among these, particularly, pigments having high affinity with water are preferably used.

Examples of pigments for magenta or red include: C.I. Pigment Red 1, 2, 3, 5, 6, 7, 15, 16, 17, 22, 23, 31, 38, 48:1, 48:2 (Permanent Red 2B(Ca)), 48:3, 48:4, 49:1, 52:2; 53:1, 57:1 (Brilliant Carmine 6B), 60:1, 63:1, 64:1, 81. 83, 88, 101 (colcothar), 104, 106, 108 (Cadmium Red), 112, 114, 122 (Quinacridone Magenta), 123, 139, 44, 146, 149, 166, 168, 170, 172, 177, 178, 179, 185, 190, 193, 209, 219 and 222, C.I. Pigment Violet 1 (Rhodamine Lake), 3, 5:1, 16, 19, 23 and 38.

Examples of pigments for orange or yellow include: C.I. Pigment Yellow 1, 3, 12, 13, 14, 15, 15:3, 17, 24, 34, 35, 37, 42 (yellow iron oxides), 53, 55, 74, 81, 83, 93, 94, 95, 97, 98, 100, 101, 104, 408, 109, 110, 117, 120, 128, 138, 150, 151, 153 and 183; C.I. Pigment Orange 5, 13, 16, 17, 31, 34, 36, 43, and 51.

Examples of pigments for green or cyan include: C.I. Pigment Blue 1, 2, 15, 15:1, 15:2, 15:3 (Phthalocyanine Blue), 16, 17:1, 56, 60, 63, C.I. Pigment Green 1, 4, 7, 8, 10, 17, 18 and 36.

In addition to the above pigments, when red, green, blue or intermediate colors are required, it is preferable that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and titanium oxide; and organic pigments (e.g., aniline black (C.I. Pigment Black 1).

In an embodiment, the colorant contains a polymer emulsion in which a water-insoluble or sparsely soluble coloring material is coated with an anionic polymer resin.

As the water-dispersible pigment according to this embodiment, a polymer emulsion obtained by coating a pigment with an anionic polymer resin is preferably used. The polymer emulsion obtained by coating a pigment with an anionic polymer resin is an emulsion in which a pigment is encapsulated by an anionic polymer resin coating layer, also termed core-and-shell dispersible pigments. Alternatively, a pigment may be adsorbed on the surface of a polymer resin dispersed particle. Examples of suitable anionic polymer resins for use in this embodiment include vinyl polymers, polyester polymers, and polyurethane polymers. For example, the anionic polymers disclosed in Japanese Patent Application Laid-Open (JP-A) Nos. 2000-53897 and 2001- 139849 can be used.

In an embodiment, the colorant contains a pigment having at least one hydrophilic group on its surface and exhibiting water-dispersibility in the absence of dispersants (hereinafter, otherwise referred to as "self-dispersible pigment").

The self-dispersible pigment according to this embodiment is a pigment whose surface has been modified so that at least one hydrophilic group is, directly or via another atom group, combined with the surface of the pigment.

The average particle diameter (D50) of the water-dispersible pigment is preferably from 0.01 $\mu$m (10 nm) to 0.25 $\mu$m (250 nm), more preferably from 20 nm to 200 nm, and it is still more preferably from 40 nm to 150 nm in the inkjet ink in view of the dispersion stability and ejection reliability.

The amount of the water-insoluble pigment contained in the inkjet ink, as a solid content, is preferably 0.5 weight% to 15 weight%, more preferably 0.8 weight% to 10 weight%, and even more preferably between 1 weight% and 6 weight%. When the amount of the water-insoluble pigment is less than 0.5 weight%, the color developing ability and image density of the ink may degrade. When it is more than 15 weight%, unfavorably, the viscosity of the ink is increased, causing degradation of the ink ejection stability.

Water dispersible resin (Latex resin)

The inkjet ink according to the present invention contains a water-dispersible resin in view of the pigment fixability to recording substrates. As the water-dispersible resin, a water-dispersible resin excellent in film formability (image formability) and having high water repellency, high waterfastness, and high weatherability is useful in recording images having high waterfastness and high image density (high color developing ability).

Examples of the water-dispersible resin include synthetic resins and natural polymer compounds.

Examples of the synthetic resins include (but are not limited to) polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins. Examples of the natural polymer compounds include celluloses, rosins, and natural rubbers.

Examples of commercially available water-dispersible resin emulsions include: Joncryl 537 and 7640 (styrene-acrylic resin emulsion, made by Johnson Polymer Co., Ltd.), Microgel E-1002 and E-5002 (styrene-acrylic resin emulsion, made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, A-1131, A-2091, A-550, BT-101, SR-270, XK-52, XK-39, A-1044, A-1049, A-1110, A-1120, A-1127, A-2092, A-2099, A-308, A-45, A-615, BT-24, BT-26, BT-26, XK-15, X-151, XK-232, XK-234, XK-237, XK-238-XK-86, XK-90 and XK-95 However, the water-dispersible resin emulsion is not limited to these examples.

The aqueous ink composition may comprise a single water dispersible resin or a combination of the plural, depending on the desired functionality.

The water-dispersible resin preferably has a function to fix the water-dispersible colorant on the surface of paper, to form a coat at normal temperature and to improve fixability of coloring material. Therefore, the minimum film forming temperature (MFT) of the water-dispersible resin is preferably 60°C or lower, more preferably 45°C or lower, even more preferably 30°C or lower. Alternatively, water dispersible resins having a higher MFT, typically up to 100° C may be used in combination with a plasticizing cosolvent in order to lower the MFT of the latex composition. Further, if the glass transition temperature of the water-dispersible resin is -40°C or lower, tucks may occur in printed matters because of the increased viscidity of the resin coat. Thus, the water-dispersible resin preferably has a glass transition temperature of -30°C or higher.

The content of the water-dispersible resin added in the ink of the present invention is preferably from 1 - 40 weight% based on the total weight of the ink, and it is more preferably from 1.5 - 30 weight%, and it is still more preferably from 2 - 25 weight%. Even more preferably, the amount of the water-dispersible resin contained in the inkjet ink, as a solid content, is 2.5 weight% to 15 weight%, and more preferably 3 weight% to 7 weight%, relative to the total ink composition.

The average particle diameter (D50) of the water-dispersible resin is preferably from 10 nm - 1 $\mu$m, it is more preferably from 10 - 500 nm, and it is still more preferably from 20 - 200nm, and especially preferably it is from 50 - 200 nm.

When the average particle diameter (D50) is equal to or less than 10 nm, significant effects in improving the image quality or enhancing transfer characteristics of the image cannot be fully expected, even if aggregation occurs.

The average particle diameter (D50) of the water-dispersible resin is relevant to the viscosity of the dispersion liquid. In the case of water-dispersible resins having the same composition, the smaller the particle diameter, the higher is the viscosity at the same solid content. The average particle diameter (D50) of the water-dispersible resin is preferably 50 nm or greater to prevent the resulting ink from having excessively high viscosity.

When the average particle diameter (D50) is equal to or greater than 1 $\mu$m, there may be a possibility that the ejection characteristics of the ink from the inkjet head or the storage stability of the ink will be deteriorated. In order not to impair the ink ejection stability, the average particle diameter (D50) of the water-dispersible resin is preferably 200 nm or smaller, and more preferably 150 nm or smaller.

In addition, there are no specific restrictions to the particle size distribution of the polymer particles, and it is possible that the polymer particles have a broad particle size distribution or the polymer particles have a particle size distribution of monodisperse type.

In an embodiment, the ink composition according to the present invention comprises two or more water-dispersible resins selected from the above cited synthetic resins, synthetic copolymer resins and natural polymer compounds in admixture with each other.

Solvent

Water is cited as an environmentally friendly and hence desirable solvent. In the present invention, the content of water to the whole ink is preferably from 20 weight% to 80 weight%. It is more preferable that the content of water is from 30 weight% to 75 weight%, even more preferable from 40 weight% to 70 weight%.

Cosolvent

As a solvent of the ink, for the purposes of improving the ejection property of the ink or adjusting the ink physical properties, the ink preferably contains a water soluble organic solvent in addition to water. As long as the effect of the present invention is not damaged, there is no restriction in particular in the type of the water soluble organic solvent.

Examples of the water-soluble organic solvent include polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Examples of water soluble organic solvents include (but are not limited to) polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Specific examples of the water soluble organic solvent include (but are not limited to) glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, petaerythritol ethoxylate, polyethylene glycol (di)methylethers preferably having a molecular weight of between 200 gram/mol and 1000 gram/mol, tri-methylol-propane, diglycerol (diglycerin), trimethylglycine (betaine), N-methylmorpholine N-oxide, decaglyserol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol mono-butyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol-monoethyl ether acetate, 1,2-hexanediol, 1,2-pentanediol and 1,2-butanediol.

In an embodiment, a mixture of the water-soluble organic solvents may be comprised in an ink composition according to the present invention. The individual organic solvents preferably being present in an amount of 1 weight% to 50 weight%, more preferably in an amount of 1 weight% to 40 weight%, even more preferably in an amount of 1 weight% to 25 weight%, relative to the total ink composition.

In an embodiment, the ink composition comprises at least one oligomeric or polymeric cosolvent, in particular at least one selected from the group consisting of polyethylene glycols and polyethylene glycol (di)methyl ethers as defined above. An additional advantage of such cosolvents is that they provide a viscosity increase to printed ink drops upon drying (due to evaporation of water). Such a viscosity increase prevents a spreading ink drop from coalescing with neighboring ink drops.

Print artifacts such as puddling and dewetting are prevented or at least mitigated by using such oligomeric and/or polymeric cosolvents in the ink composition. An additional advantage of this embodiment is that media curling is effectively reduced.

Oligomeric and polymeric cosolvents are preferably present in an amount of between 0 weight% and 30 weight%, more preferably between 2 weight% and 27 weight% and even more preferably between 5 weight% and 25 weight%.

The total amount of the water-soluble organic solvent contained in the ink composition is not particularly limited. It is, however, preferably 0 weight% to 75 weight%, and more preferably 10 weight% to 70 weight%, and even more preferably 15 weight% to 60 weight% with respect to the total ink composition. When the amount of the water-soluble organic solvent is more than 80 weight%, the drying times of the ink compositions are too long. When the amount is less than 10 weight%, water in the ink compositions may evaporate more quickly, which may significantly reduce the stability of the ink composition.

In an embodiment, an amino alcohol, in particular a N-alkyl-dialkanolamine, is used as a cosolvent in a small amount, i.e. less than 3 weight%, preferably less than 2 weight%, more preferably around 0.5 weight% with respect to the total ink composition. In such an ink formulation, the total fraction of stabilizing cosolvents can be significantly reduced (e.g. from 40 weight% to between 20 weight% and 30 weight%) without compromising the ink stability (in the inkjet head) and spreading properties on a recording substrate. An ink composition according to the present embodiment preferably comprises a total amount of cosolvents of between 0 weight% and 40 weight%, preferably between 10 weight% and 35 weight%, more preferably between 20 weight% and 30 weight%. Examples of suitable amino alcohols are: triethanolamine, N-metyldiethanolamine, N-ethyldiethanolamine, N-n-butyl-monoethanolamine and N-n-butyl-diethanolamine.

Surfactants

It is preferable that the ink of the present invention contains a surfactant in order to improve an ink ejection property and/or the wettability of the surface of a recording substrate, and the image density and color saturation of the image formed and reducing white spots therein. To improve the spreading of the ink on the surface of recording substrate and to reduce puddling, it is preferable to adjust the dynamic surface tension (measured at 10 Hz) of the ink composition to 35 mN/m or lower, preferably to 34 mN/m or lower, more preferably to 33 mN/m or lower, even more preferably to 32 mN/m or lower by the surfactant. The static surface tension of the ink composition is preferably below 30 mN/m (measured at 0.1 Hz).

Examples of the surfactant include nonionic surfactants, cationic surfactants, anionic surfactants, amphoteric surfactants, in particular betaine surfactants, silicone surfactants, and fluorochemical surfactants. Particularly, at least one selected from acetylene surfactants, silicone surfactants and fluorochemical surfactants capable of reducing the surface tension to 30 mN/m or lower is preferably used.

Examples of a cationic surfactant include: aliphatic amine salts, aliphatic quarternary ammonium salts, benzalkonium salts, benzethonium chloride, pyridinium salts, imidazolinium salts.

Examples of an anionic surfactant include: polyoxyethylene alkylether acetic acid salts, dodecylbenzene sulfonic acid salts, lauric acid salts, and salts of polyoxyethylene alkylether sulfate, an aliphatic acid soap, an N-acyl-N-methyl glycin salt, an N-acyl-N-methyl-$\beta$-alanine salt, an N-acylglutamate, an acylated peptide, an alkylsulfonic acid salt, an alkylbezenesulfonic acid salt, an alkylnaphthalenesulfonic acid salt, a dialkylsulfo succinate (e.g. sodium dioctyl sulfosuccinate (DSS); alternative names: docusate sodium, Aerosol OT and AOT), alkylsulfo acetate, $\alpha$-olefin sulfonate, N-acylmethyl taurine, a sulfonated oil, a higher alcohol sulfate salt, a secondary higher alcohol sulfate salt, an alkyl ether sulfate, a secondary higher alcohol ethoxysulfate, a polyoxyethylene alkylphenyl ether sulfate, a monoglysulfate, an aliphatic acid alkylolamido sulfate salt, an alkyl ether phosphate salt and an alkyl phosphate salt. Examples of an amphoteric surfactant include: a carboxybetaine type, a sulfobetaine type, an aminocarboxylate salt and an imidazolium betaine.

Examples of a nonionic surfactant include: polyoxyethylene alkylether, polyoxypropylene polyoxyethylene alkylether, a polyoxyethylene secondary alcohol ether, a polyoxyethylene alkylphenyl ether, a polyoxyethylene sterol ether, a polyoxyethylenelanolin derivative polyoxyethylene polyoxypropylene alkyl ether, polyoxyethylene alkylester, a polyoxyethyleneglycerine aliphatic acid ester, a polyoxyethylene castor oil, a hydrogenated castor oil, a polyoxyethylene sorbitol aliphatic acid ester, a polyethylene glycols aliphatic acid ester, an aliphatic acid monoglyceride, a polyglycerine aliphatic acid ester, a sorbitan aliphatic acid ester, polyoxyethylene sorbitan aliphatic ester, a propylene glycol aliphatic acid ester, a cane sugar aliphatic acid ester, an aliphatic acid alkanol amide, polyoxyethylene alkylamide, a polyoxyethylene aliphatic acid amide, a polyoxyethylene alkylamine, an alkylamine oxide, an acetyleneglycol, an ethoxylated acetylene glycol, acetylene alcohol.

As the fluorochemical surfactant, a surfactant having 2 to 16 fluorine-substituted carbon atoms is preferred, and a surfactant having 4 to 16 fluorine-substituted carbon atoms is more preferred. When the number of fluorine-substituted carbon atoms is less than 2, the effect peculiar to a fluorochemical surfactant may not be obtained. When it is more than 16, degradation in storage stability etc. may arise.
Examples of the fluorochemical surfactants include nonionic fluorochemical surfactants, anionic fluorochemical surfactants, and amphoteric fluorochemical surfactants. Examples of the nonionic fluorochemical surfactants include perfluoroalkyl phosphoric acid ester compounds, perfluoroalkyl ethylene oxide adducts, and polyoxyalkylene ether polymer compounds having perfluoroalkyl ether groups as side chains. Among these, polyoxyalkylene ether polymer compounds having perfluoroalkyl ether groups as side chains are preferable because they are low in foaming property.

As the fluorochemical surfactants, commercially available products may be used. Examples of the commercially available products include SURFLON S-HI, S-112, S-113. S-121, S-131, S-132, S-141 and S-145 (all of which are produced by Asahi Glass Co., Ltd.), FLUORAD FC-93, FC-95, FC-98, FC-129, FC-135, FC-170C, FC-430 and FC-431 (all of which are produced by Sumitomo 3M Limited), MEGAFAC F-470, F-1405 and F-474 (all of which are produced by Dainippon Ink Chemical Industries Co., Ltd.), ZONYL TBS, FSP, FSA, FSN-100, FSN, FSO-100, FSO, FS-300 and UR (all of which are produced by E. I. du Pont de Nemours and Company), FT-110, FT-250, FT-251, FT-400S, FT- 150 and FT-400SW (all of which are produced by Neos Company Limited), and POLYFOX PF-136A, PF-156A, PF-151N, PF-154, and PF-159 (all of which are produced by OMNOVA Solutions Inc.). Among these, ZONYL FS-300 (produced by E. I. du Pont de Nemours and Company), FT-110, FT-250, FT-251, FT-400S, FT-150, FT-400SW (produced by Neos Company Limited), and POLYFOX PF-151 N (produced by OMNOVA Solutions Inc.) are preferable in that they are excellent in print quality, particularly in color developing ability and in dye-leveling property.

The silicone surfactant is not particularly limited and may be suitably selected in accordance with the intended use.

Examples of the silicone surfactant include side-chain-modified polydimethylsiloxane, both-ends-modified polydimethylsiloxane, one-end-modified polydimethylsiloxane, and side-chain/both-ends-modified polydimethylsiloxane. Polyether-modified silicone surfactants having, as a modified group, a polyoxyethylene group or a polyoxyethylene polyoxypropylene group are particularly preferable because they exhibit excellent physical properties as water-based surfactants. The silicone surfactant may be suitably synthesized or commercial products may be used. The commercial product is readily available from BYK Chemie GmbH, Shin-Etsu Chemical Co., Ltd., TORAY Dow Corning Silicone Co., Ltd., Nihon Emulsion Co., Ltd., Kyoeisha Chemical Co., Ltd., or the like.

The polyether-modified silicone surfactant is not particularly limited and may be suitably selected in accordance with the intended use

Examples of the commercial products include KF-618, KF-642 and KF-643 (produced by Shin-Etsu Chemical Co., Ltd.); EMALEX-SS-5602 and SS- 1906EX (produced by Nihon Emulsion Co., Ltd.); FZ-2105, FZ-2118, FZ-2154, FZ-2161, FZ-2162, FZ-2163 and FZ-2164 (produced by TORAY Dow Corning Silicone Co., Ltd.); and BYK-33, BYK 331, BYK 341, BYK 348, BYK 349, BYK 3455, BYK-387 (produced by BYK Chemie GmbH); Tegowet 240, Tegowet 245, Tegowet 250, Tegowet 260 (produced by Evonik); Silwet L-77 (produced by Sabic).

All surfactants mentioned in this section may be used solely, or they may be used in combination of the plural.

Penetrant

The ink composition according to the present invention may optionally further contain a penetrant, which is a compound that promotes absorption of the ink composition in the recording substrate. Penetrants as used in the present invention preferably comprise at least one of non-wettable polyol compounds having 8 to 11 carbon atoms or glycol ether compounds for the purpose of satisfying the permeability and the solubility in water. Here, the term "non-wettable" means having a solubility in the range of 0.2% by mass to 5.0% by mass in water at 25°C. Note that compounds used as cosolvents as disclosed above, may also act as penetrant.

Particular examples of penetrants include (but are not limited to): 2-ethyl-1,3-hexane diol [solubility: 4.2% (25°C)] and 2,2,4-trimethyl-1,3-pentane diol [solubility: 2.0% (25°C)].

Examples of other non-wettable polyol compounds include aliphatic diols such as: 2-ethyl-2-methyl-1,3-propanediol; 3,3-dimethyl-1,2-butanediol; 2,2-diethyl-1,3-propanediol; 2-methyl-2-propyl-1,3-propanediol; 2,4-dimethyl-2,4-pentanediol; 2,5-dimethyl-2,5-hexanediol; and 5-hexen-1,2-diol.

Other penetrants usable alone or in combination with those described above are not particularly limited, as long as they can be dissolved in the ink composition and designed to have desired physical properties, and may be suitably selected in accordance with the intended use. Examples thereof include alkyl and aryl ethers of polyhydric alcohols (e.g., diethylene glycol monophenyl ether, ethylene glycol monophenyl ether, ethylene glycol monoallyl ether, diethylene glycol monophenyl ether, diethylene glycol monobutyl ether, propylene glycol monobutyl ether, and tetraethylene glycol chlorophenyl ether); and lower alcohols (e.g., ethanol).

The amount of the penetrant contained in the inkjet ink is from 0 weight% to 4.0 weight%, preferably from 0.1 weight% to 3.0 weight%, more preferably from 0.5 weight% to 2.0 weight%, relative to the total ink composition. When the amount of the penetrant is less than 0.1 weight%, quick-dryness may not be obtained, possibly causing image bleeding (coalescence). When it is more than 4.0 weight%, the dispersion stability of colorants and water-dispersible resins may be impaired, easily causing nozzle clogging, and the permeability to recording substrates may be higher than necessary, possibly causing a degradation of image density and occurrence of ink-strikethrough.

Ink compositions according to the present invention may be brought to a pH within the claimed range by adding an alkaline component to the ink composition, for example NaOH, KOH or ammonia. Also a (water based) buffer solution may be used to bring the pH of the ink composition within the claimed range, for example weak amines may be used or commercially available buffer solution such as a pH 9 buffer solution of NaOH borate and KCl.

Examples of weak amines are alkanol amines as disclosed above (as cosolvents).

**Printing process**

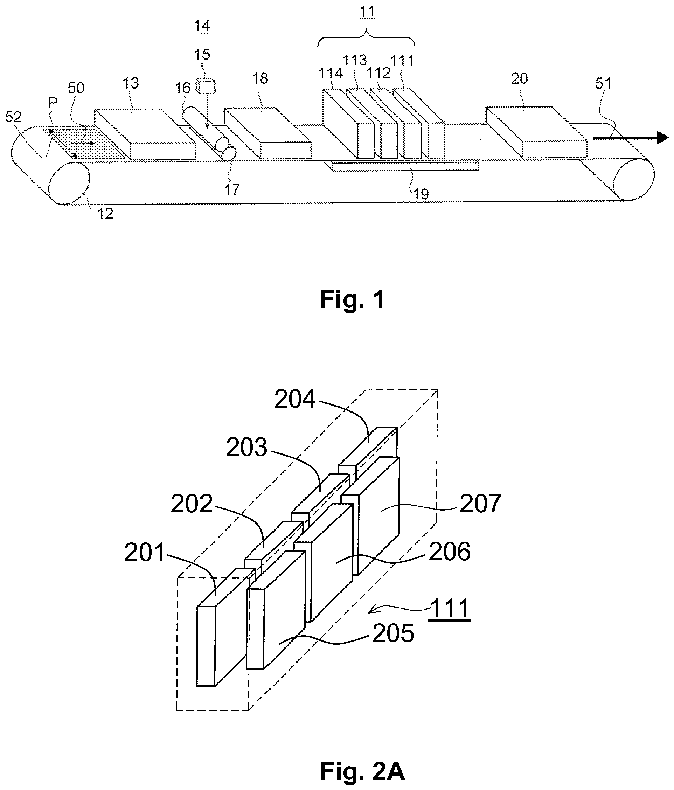

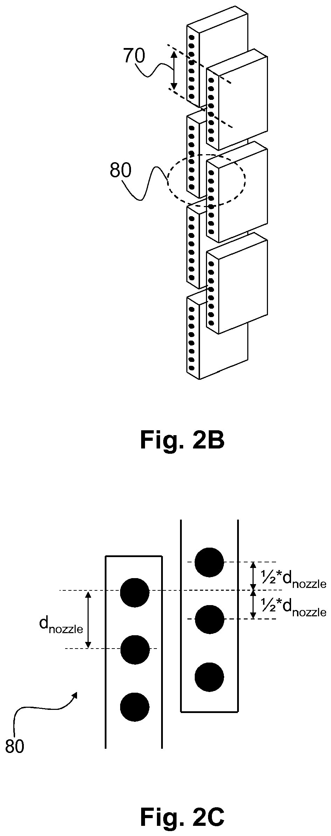

A printing process in which the inks according to the present invention may be suitably used is described with reference to the appended drawings shown in Fig. 1 and Fig. 2. Figs. 1 and 2 show schematic representations of an inkjet printing system and inkjet marking device, respectively.

Fig. 1 shows that a sheet of a recording substrate, in particular a machine coated medium, P, is transported in a direction for conveyance as indicated by arrows 50 and 51 and with the aid of transportation mechanism 12. Transportation mechanism 12 may be a driven belt system comprising one (as shown in Fig. 1) or more belts. Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums. For a proper conveyance of the sheets of recording substrate, the sheets need to be fixed to the transportation mechanism. The way of fixation is not particularly limited and may be selected from electrostatic fixation, mechanical fixation (e.g. clamping) and vacuum fixation. Of these vacuum fixation is preferred.

The printing process as described below comprises of the following steps: media pretreatment, image formation, drying and fixing and optionally post treatment.

Media pretreatment

To improve the spreading and pinning (i.e. fixation of pigments and water-dispersed polymer particles) of the ink on the recording substrate, in particular on slow absorbing media, such as machine coated media, the recording substrate may be pretreated, i.e. treated prior to printing an image on the substrate. The pretreatment step may comprise one or more of the following:

- preheating of the recording substrate to enhance spreading of the used ink on the recording substrate and/or to enhance absorption of the used ink into the recording substrate;
- primer treatment, by coating the recording substrate with a primer solution, for increasing the surface tension of recording substrate in order to improve the wettability of the recording substrate by the used ink and to control the stability of the dispersed solid fraction of the ink composition (i.e. pigments and dispersed polymer particles). or in the liquid phase by coating the recording substrate with a primer solution. The primer solution may comprise water as a solvent, one or more cosolvents, additives such as surfactants and at least one compound selected from a (polyvalent) metal salt, an acid and a cationic resin;
- pretreatment by subjecting the recording substrate to a gaseous acid. This may be considered to be a primer treatment performed in the gas phase, e.g. with gaseous acids such as hydrochloric acid, sulfuric acid, acetic acid, phosphoric acid and lactic acid. In this treatment the machine coated medium P is transported through a more or less closed chamber in which the used acid is vaporized and brought into contact with the coated medium P. An advantage of this treatment above the liquid
- corona or plasma treatment.

Plasma treatment may be used as a pretreatment step by exposing a sheet of a recording substrate to an ionized gas of a certain composition and at a certain electric power. In particular when used on media like polyethylene (PE) films, polypropylene (PP) films, polyetyleneterephtalate (PET) films and machine coated media, the adhesion and spreading of the ink can be improved by increasing the surface energy of the media. With machine coated media, the absorption of water can be promoted which may induce faster fixation of the image and less puddling on the recording substrate. Surface properties of the recording substrate may be tuned by using different gas mixtures, such as air (corona), pure oxygen, nitrogen, carbondioxide, methane, fluorine gas, argon, neon and mixtures thereof.

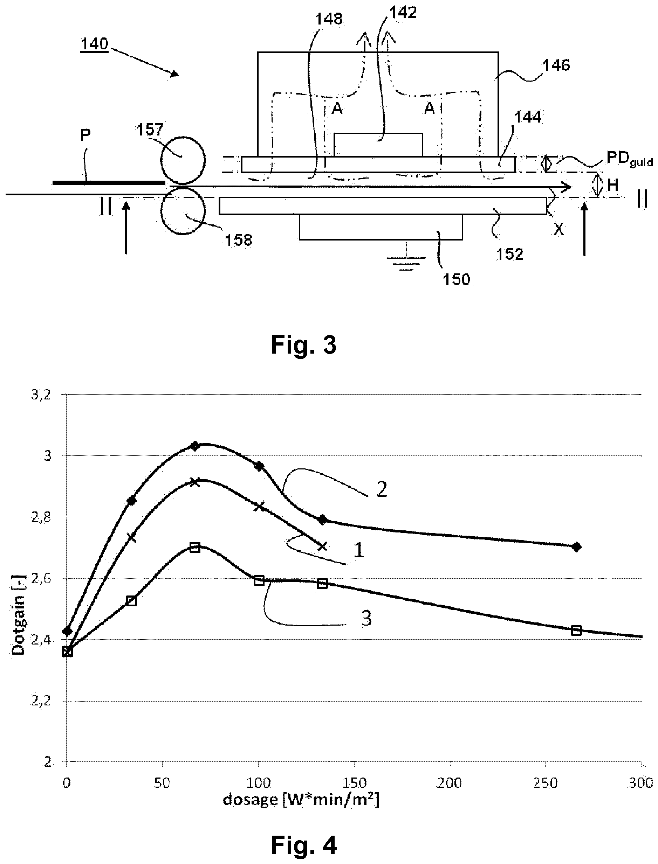

In the context of the present invention, plasma treatment is a general term for treatment of recording substrates with ionized gases with a plasma treatment device, e.g. as shown in Fig. 3. Corona treatment is a term that is used in the context of the present invention to indicate an air plasma treatment with a plasma treatment device, e.g. as shown in Fig. 3.

Fig. 1 shows that the sheet of recording substrate P may be conveyed to and passed through a first pretreatment module 13, which module may comprise a preheater, for example a radiation heater, a corona/plasma treatment unit, a gaseous acid treatment unit or a combination of any of the above. Optionally and subsequently, a predetermined quantity of the aqueous primer solution is applied on the surface of the recording substrate P at aqueous primer solution applying member 14. Specifically, the aqueous primer solution is provided from storage tank 15 of the aqueous primer solution to the aqueous primer solution applying member 14 composed of double rolls 16 and 17. Each surface of the double rolls may be covered with a porous resin material such as sponge.

After providing the aqueous primer solution to auxiliary roll 16 first, the aqueous primer solution is transferred to main roll 17, and a predetermined quantity is applied on the surface of the recording substrate P. Subsequently, the coated printing paper P on which the aqueous primer solution was given may optionally be heated and dried by drying member 18 which is composed of a drying heater installed at the downstream position of the aqueous primer solution applying member 14 in order to decrease the quantity of the water content in the aqueous primer solution to a predetermined range. It is preferable to decrease the water content in an amount of 1.0 weight% to 30 weight% based on the total water content in the provided primer solution provided on the recording substrate P.

Fig. 3 shows the side view of a plasma treatment device that can be used in a method according to an embodiment of the present invention. A sheet of recording substrate P is transported by sheet transporting means through a transport path 148 in the direction indicated by arrow X along a corona unit 140. The transport path 148 has a height H, which is sufficient to accommodate the thickness of the transported cut sheet material. Note that the transport path height H in Fig. 3 is shown schematically and is typically in the range of 1 to 3 mm. The sheet transport means comprises a driving roller 158 and a free rotatable roller 157, which together form a transport pinch. The corona unit 140 comprises a body 146, a plasma generating means comprising a high voltage electrode 142, and a sheet guidance means 144. The sheet guidance means 144 is positioned between the high voltage electrode 142 and the transport path 148. The sheet guidance means 144 provide a predetermined distance $PD_{guid}$ between the transport path 148 and the high voltage electrode 142. The predetermined distance $PD_{guid}$ in Fig. 3 is shown schematically and is typically in the range between 1 and 3 mm, preferably about 1.5 mm. The sheet guidance means 144 may be constituted of a ceramic material, such as aluminium oxide ($Al_2O_3$), silicon nitride ($Si_3N_4$) or silicon carbide (SiC). The plasma generating means further comprises a counter electrode 150. The counter electrode 150 is electrically grounded. Further the sheet transporting means comprises a sheet supporting surface 152 for supporting the sheet P during transport in the direction of the sheet transport path 148 along the high voltage electrode 142.

An air flow indicated by arrows A is provided inside of the corona unit 140. The air flow removes air contaminations, which is generated between the high voltage electrode 142 and the counter electrode 150, and directs the contaminations towards an air pump device (not shown). The air pump device further contains a filter in order to remove the air contaminations, such as ozone, from the air flow (gas douche).

In this embodiment, a sheet of a recording substrate may be transported between the high voltage electrode and het counter electrode. In this configuration, the gas present in the pores (e.g. air-pockets) of the substrate is also ionized and hence the whole thickness of the substrate is plasma treated, unlike the treatment with a plasma gun wherein the counter electrode is comprised in the gun.

In another embodiment the sheet supporting surface 152 comprises an electrical insulating layer, for example a ceramic layer, such as a glass layer, or a polymeric layer. The electrical insulating layer arranged in between the counter electrode 150 and the transport path 148 provides that the surface treatment of the sheet of recording substrate P during the plasma treatment process of the high voltage electrode 142 towards the surface of the cut sheet material attains a certain treatment widening. This improves the uniformity and quality of the surface treatment of the sheet of recording substrate P.

To prevent the transportation mechanism 12 being contaminated with primer solution, a cleaning unit (not shown) may be installed and/or the transportation mechanism may be comprised multiple belts or drums as described above. The latter measure prevents contamination of the upstream parts of the transportation mechanism, in particular of the transportation mechanism in the printing region.

Image formation

Image formation is performed in such a manner that, employing an inkjet printer loaded with inkjet inks, ink droplets are ejected from the inkjet heads based on the digital signals onto a recording substrate.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the recording substrate to form all pixels of the image by a single passage of a recording substrate underneath an inkjet marking module.

In Fig. 1, 11 represents an inkjet marking module comprising four inkjet marking devices, indicated with 111, 112, 113 and 114, each arranged to eject an ink of a different color (e.g. Cyan, Magenta, Yellow and blacK). The nozzle pitch of each head is preferably about 360 dpi. In the present invention, "dpi" indicates a dot number per 2.54 cm.

An inkjet marking device for use in single pass inkjet printing, 111, 112, 113, 114, has a length, L, of at least the width of the desired printing range, indicated with double arrow 52, the printing range being perpendicular to the media transport direction, indicated with arrows 50 and 51. The inkjet marking device may comprise a single printhead having a length of at least the width of said desired printing range. The inkjet marking device may also be constructed by combining two or more inkjet heads, such that the combined lengths of the individual inkjet heads cover the entire width of the printing range. Such a constructed inkjet marking device is also termed a page wide array (PWA) of printheads. Fig. 2A shows an inkjet marking device 111 (112, 113, 114 may be identical) comprising 7 individual inkjet heads (201, 202, 203, 204, 205, 206, 207) which are arranged in two parallel rows, a first row comprising four inkjet heads (201 - 204) and a second row comprising three inkjet heads (205 - 207) which are arranged in a staggered configuration with respect to the inkjet heads of the first row. The staggered arrangement provides a page wide array of nozzles which are substantially equidistant in the length direction of the inkjet marking device. The staggered configuration may also provide a redundancy of nozzles in the area where the inkjet heads of the first row and the second row overlap, see 70 in Fig. 2B. Staggering may further be used to decrease the nozzle pitch (hence increasing the print resolution) in the length direction of the inkjet marking device, e.g. by arranging the second row of inkjet heads such that the positions of the nozzles of the inkjet heads of the second row are shifted in the length direction of the inkjet marking device by half the nozzle pitch, the nozzle pitch being the distance between adjacent nozzles in an inkjet head, $d_{nozzle}$ (see Fig. 2C, which represents a detailed view of 80 in Fig. 2B). The resolution may be further increased by using more rows of inkjet heads, each of which are arranged such that the positions of the nozzles of each row are shifted in the length direction with respect to the positions of the nozzles of all other rows.

In image formation by ejecting an ink, an inkjet head (i.e. printhead) employed may be either an on-demand type or a continuous type inkjet head. As an ink ejection system, there may be usable either the electric-mechanical conversion system (e.g., a single-cavity type, a double-cavity type, a bender type, a piston type, a share mode type, or a shared wall type), or an electric-thermal conversion system (e.g., a thermal inkjet type, or a Bubble Jet type (registered trade name)). Among them, it is preferable to use a piezo type inkjet recording head which has nozzles of a diameter of 30 $\mu$m or less in the current image forming method.

Fig. 1 shows that after pretreatment, the recording substrate P is conveyed to upstream part of the inkjet marking module 11. Then, image formation is carried out by each color ink ejecting from each inkjet marking device 111, 112, 113 and 114 arranged so that the whole width of the recording substrate P is covered.

Optionally, the image formation may be carried out while the recording substrate is temperature controlled. For this purpose a temperature control device 19 may be arranged to control the temperature of the surface of the transportation mechanism (e.g. belt or drum) underneath the inkjet marking module 11. The temperature control device 19 may be used to control the surface temperature of the recording substrate P, for example in the range of 30°C to 60°C. The temperature control device 19 may comprise heaters, such as radiation heaters, and a cooling means, for example a cold blast, in order to control the surface temperature of the recording substrate within said range. Subsequently and while printing, the recording substrate P is conveyed to the downstream part of the inkjet marking module 11.

Drying and fixing

After an image has been formed on the recording substrate, the prints have to be dried and the image has to be fixed onto the recording substrate. Drying comprises the evaporation of solvents, in particular those solvents that have poor absorption characteristics with respect to the selected recording substrate.

Fig. 1 schematically shows a drying and fixing unit 20, which may comprise a heater, for example a radiation heater. After an image has been formed, the print is conveyed to and passed through the drying and fixing unit 20. The print is heated such that solvents present in the printed image, to a large extent water, evaporate. The speed of evaporation and hence drying may be enhanced by increasing the air refresh rate in the drying and fixing unit 20. Simultaneously, film formation of the ink occurs, because the prints are heated to a temperature above the minimum film formation temperature (MFT). The residence time of the print in the drying and fixing unit 20 and the temperature at which the drying and fixing unit 20 operates are optimized, such that when the print leaves the drying and fixing unit 20 a dry and robust print has been obtained. As described above, the transportation mechanism 12 in the fixing and drying unit 20 may be separated from the transportation mechanism of the pretreatment and printing section of the printing apparatus and may comprise a belt or a drum.

EXAMPLES

**Materials**

All chemicals are obtained from Sigma Aldrich and used as obtained, unless otherwise stated.

**Measurement methods**

Surface Tension of Liquid

The surface tension is measured using a Sita bubble pressure tensiometer, model SITA online t60, according to the (maximum) bubble pressure method. The surface tension of the liquids to be tested (e.g. inks according to the present invention) is measured at 30°C unless otherwise indicated. The surface tension is determined at different bubble frequencies, for example at a frequency of 0.1 Hz (also termed static surface tension) and at 10 Hz (also termed dynamic surface tension).

Surface Tension (surface energy) of recording substrates

Drops of 2$\mu$l of a set different surface tensions liquids are put on the recording substrate. The set of surface tension liquids comprises liquids having a surface tension in a range of between 28 mN/m to 72 mN/m with an increment in surface tension of 2 mN/m. If the surface tension of a liquid is below the surface tension of the recording substrate, the droplet of surface tension liquid will spread on the recording substrate. If the surface tension of the surface tension liquid is higher than the surface tension of the recording substrate, no spreading will occur. The surface tension liquid out of the set of surface tension liquids where the recording substrate just did not give spontaneous spreading is a measure for the surface tension (surface energy) of the recording substrate. In general the surface tension liquids are colored, such that spreading behavior can be easily detected with the naked eye.

pH measurement

pH measurements are performed with a 826 pH mobile 6.0256.100 Flat-membrane electrode. This electrode is used to measure both print substrate(paper) properties and ink properties.

Print experiments

Prints are all made with the Kyocera KJ4 series 600 dpi print head.

Dotgain and dot shape

The dotgain is determined by image analysis. Dots on the print substrate are recorded with a digital camera (Olympus camera) and analyzed with AnalySIS software.

The dot diameter is determined with the AnalySIS software. De ink drop diameter that has left the printing device is determined by printing a known number of drops in a container and determining the weight of the printed ink. The droplet diameter is calculated from the droplet weight, the ink density (approx. 1.04 gr/ml for the inks in the present application) and under the assumption that the droplets are ideal spheres having a volume of $4/3 * \pi * r^3$, wherein r is the radius (i.e. ½ * diameter) of the droplet. The dotgain is defined as the dot diameter divided by the droplet diameter.

The shape factor of a dot is determined by determining the actual length of the circumference of the printed dot (C1), which is determined with the AnalySIS software, and the circumference of a circle having the same surface area than the printed dot (C2). The shape factor (f) equals C2/C1. The closer the shape factor is to 1, the more circular the dot shape is. The more irregular the shape of the printed dot is, the lower the shape factor is.

Example 1: Preparation of ink composition having pH of 8

113.6 grams of NeoCryl® A-1127 latex (obtained from DSM, 44 weight% latex, the latex particles having an average particle diameter D50 of ±60 nm.), 285.7 grams of Pro-Jet© Cyan APD 1000 pigment dispersion (14 weight% pigment dispersion, obtained from FujiFilm Imaging Colorants), 195 grams of glycerin (obtained from Sigma Aldrich), 195 grams of 1,2-propanediol (obtained from Sigma Aldrich), 4 grams of sodium dioctyl sulfosuccinate, AOT (obtained from Sigma Aldrich), 2,5 grams of BYK®-349 (obtained from BYK) and 204.2 grams of demineralized water were mixed in a vessel, stirred for approximately 60 minutes and filtered over a Pall Profile® Star absolute glass filter having a pore size of 1 μm.

The obtained ink composition comprises:

- 5 weight% NeoCryl® A-1127 latex (amount of solids relative to the total ink composition);
- 4 weight% Pro-jet® Cyan APD 1000 pigment (amount of solids relative to the total ink composition);
- 19.5 weight% glycerol;
- 19.5 weight% 1,2 propanediol (propylene glycol);
- 0.4 weight% AOT;
- 0.25 weight % BYK®-349; and
- 51.35 weight% water.

The pH of the ink composition, determined according to the above described method was 8.

Example 2 : Preparation of ink composition having pH of 9.4

Example 1 was repeated and NaOH was added until the pH of the ink was 9.4.

Example 3 : Preparation of ink composition buffered with pH 9 buffer

Example 1was repeated with pH 9 buffer instead of water. The pH 9 buffer comprises water, KCl/Borate/NaOH, and is obtained from Aldrich (109461). The ink composition according to this example therefore comprises 51.35 weight% of the pH 9 buffer instead of water. The other components are present in the amounts as stated in Example 1

The pH of the ink composition, determined according to the above described method was 8.6.

Example 4 : printing with the inks prepared in examples 1, 2 and 3 respectively as a function of corona (plasma) dosage.

Sheets of recording substrates are corona (i.e. air plasma) treated with a device similar to the one shown in Fig. 3. The plasma device used has a maximum power of 600 W. Variations in corona (plasma) dosage were achieved by varying the power and/or the transport velocity of the recording substrate through the plasma treatment device. Plasma dosage or corona dosage can be calculated with the following formula:

$$Dosage = P / (v * b)$$

Wherein P represents the plasma (corona) power [W]; v represents the transportation speed of the recording substrate through the plasma device [m/min]; b is the treatment width (width recording substrate) [m]. The plasma dosage or corona dosage is therefore expressed in $W*min/m^2$.

The results are shown in Fig. 4. Fig. 4 shows a graph of the correlation between the corona (plasma) dosage (horizontal axis) and the obtained dotgain (vertical axis) on Hello Gloss ($250 gr./m^2$). From the graph in Fig. 4 it can be deduced that the inks of examples 1, 2, and 3 (curves 1, 2 and 3, respectively) show more or less the same spreading behavior (dotgain) when no corona treatment is performed (i.e. at a dosage of $0 W*min/m^2$). Fig. 4 further shows that initially the dotgain increases for all ink recipes to a maximum dot spreading at a corona dosage of approximately 70 $W*min/m^2$.

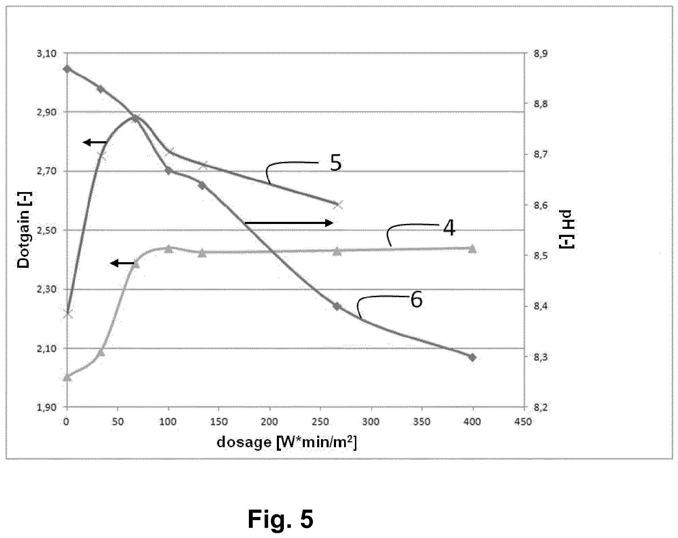

Without wanting to be bound to any theory it is believed that initially the influence of the increase of the surface tension of the substrate has a larger influence on dot spreading than the increasing of the acidity of the surface of the substrate, such that initially the dotgain increases with increasing corona dosage, which is evidenced by curve indicated with 4 in Fig.5, which curve represents the spreading behavior (dotgain, represented on the left vertical axis) of water as a function of corona (plasma) dosage. Fig. 5 further shows the spreading behavior (left vertical axis) of an ink composition comparable to the ink composition of Example 1 (curve 5) as a function of corona (plasma) dosage (horizontal axis). Fig. 5 also shows the pH (right vertical axis) of the recording substrate as a function of the corona (plasma) dosage. Curve 4 of Fig. 5 shows that initially the dot spreading increases with increasing corona dosage. Curve 6 shows the decreasing pH of the recording substrate (i.e. increasing acidity). Curve 5 shows that initially the dotgain of the ink composition increases with increasing corona (plasma) dosage. At a certain point of corona dosage, typically in this example around 50 $W*min/m^2$, the acidity of the substrate has increased (i.e. lower pH) such that upon contact between the ink and the recording substrate, the pH of the ink decreases due to neutralization which causes the alkaline stabilized dispersions in the ink (i.e. latex and/or pigment) to start to destabilize, leading to a decrease in dotgain. The dotgain reaches its maximum at approximately 70 $W*min/m^2$. In general, the faster the neutralization of the ink upon contact with the recording substrate occurs, the faster the latex and/or pigment dispersion in the ink destabilize, the smaller the dotgain is. Therefore, by increasing the pH of the ink with a strong base (e.g. NaOH, see example 2), it takes longer to neutralize the ink and hence destabilization of the dispersions in the ink (i.e. latex and/or pigment) may take longer, leading to a higher dotgain at the same plasma (corona) dosage (compare curves 1 and 2).

Fig. 4 also shows that the ink comprising a pH 9 buffer, which besides NaOH also contains borate and KCl, the effect of destabilization of the dispersions in the ink is much faster, leading to a lower dotgain at the same plasma (corona) dosage (compare curves 1 and 3). Without wanting to be bound to any theory, it is believed that this is caused by a higher ionic strength of the buffered ink composition (Example 3) compared to the reference ink (Example 1). The speed of destabilization of the dispersions present in the ink composition increases due to the higher ionic strength of the ink composition of Example 3. The present destabilizing ions are inactive at high pH and become active due to neutralization of the ink composition upon contact with the acidified recording substrate.

The ink composition according to Example 3 represents an extremity. All the water of ink composition of Example 1 has been replaced by the pH 9 buffer. Therefore the ionic strength of the ink composition of Example 3 is very high. When the water of the ink in Example 1 would be replaced in part by the pH 9 buffer, the dotgain vs. dosage curve may be tuned even without changing the initial pH of the ink.

Example 5 : printing of the ink according to Example 1 on media treated with gaseous acids.

Two type of media, top mail 50 gr. and UPM digifinesse gloss were treated with gaseous acids, by placing the media in a jar comprising liquid acid on the bottom of the jar and saturated vapor in the jar above the liquid surface. The sheets of media did not contact the liquid surface. If required the jar containing the acid and the sheet of print substrate was (slightly) heated. The ink composition according to Example 1 was printed on a treated sheet of recording substrate and the dotgain was determined in accordance with the above described method. The table below shows the treatment conditions and the dotgain results of the various tested samples.

It can be seen from table 1 that treatment with strong gaseous acids (Hydrochloric acid and Nitric acid) leads to a significant reduction of the dotgain on Top mail 50 gr., which is a plain paper. It can also be noted that when hydrochloric acid is used for treating Top mail 50 gr. the dot shape factor increases significantly, which indicates that the dots become more circular due to pretreatment. and hence provides relatively fast destabilization of dispersed particles in the ink composition, e.g. fast pinning of pigment particles.

*Table 1 : gaseous acid treatment conditions and dotgain results*

| Substrate | Acid | Temperature (°C) | Exposure time (s) | dotgain[2] | dot shape factor |
|---|---|---|---|---|---|
| Top mail 50 gr | Untreated | - | 0 | 3.7 | 0.67 |
| | Hydrochloric acid | RT[1] | 60 | 2.1 | 0.88 |
| | Nitric acid | RT[1] | 60 | 3.1 | 0.65 |
| | Lactic acid | RT[1] | 60 | 3.6 | 0.70 |
| UPM digifinesse gloss | Untreated | - | 0 | 2.7 | 0.98 |
| | Hydrochloric acid | RT[1] | 60 | 2.1 | 0.99 |
| | Lactic acid | 40°C | 60 | 2.6 | 0.98 |
| [1] Room Temperature [2] Kyocera KJ4 printhead dotsize 3, droplet size 26.7 $\mu$m. | | | | | |

On UPM digifinesse gloss, which is a machine coated paper, the dot shape factor slightly changes due to treatment with gaseous hydrochloric acid. The dotgain decreases due to treatment with gaseous acids, indicating that neutralization of the alkaline stabilized ink composition comprising dispersed particles (latex and/or pigment) on a recording substrate that has been treated with a gaseous acid is faster than on an untreated recording substrate, leading to faster destabilization of said dispersed particles. Table 1 also shows that this effect is stronger when a strong acid (e.g. hydrochloric acid) is used in comparison with the cases wherein a weak acid (lactic acid) is used.

**Claims**

1. A method of printing an aqueous ink on a recording substrate; the aqueous ink composition comprises particles of a water dispersible colorant and has a pH of between 8 and 12; the method comprising the steps of :

   a) pretreating the recording substrate by at least partial acidification of the recording substrate, the at least partial acidification being performed by subjecting the recording substrate to a gaseous acid or by subjecting the recording substrate to a plasma treatment;
   b) imagewise printing the ink composition on the pretreated recording substrate.

2. The method according to claim 1, wherein the recording substrate comprises an at least partly porous structure.

3. The method according to any one of the preceding claims, wherein in the recording substrate is selected from the group consisting of plain papers, machine coated papers and gloss coated papers.

4. The method according to any one of the preceding claims, wherein the aqueous ink comprises particles of a water dispersible polymer.

5. The method according to any one of the preceding claims, wherein the aqueous ink composition comprises a water soluble organic solvent.

6. The method according to any one of the preceding claims, wherein the ink composition has a pH of between 8.5 and 11.5, preferably between 9 and 11.

7. The method according to any one of the preceding claims, wherein the ink is buffered at a pH of between 8 and 12.

8. The method according to claim 7, wherein the aqueous ink composition is buffered by a weak organic base being comprised in the ink composition.

9. The method according to any one of the preceding claims , wherein the aqueous ink composition comprises an organic amine.

10. The method according to claim 9, wherein the organic amine is selected from the group consisting of ammonia, alkylamines and alkanolamines.

11. The method according to any one of the preceding claims, wherein the aqueous ink composition comprises a water soluble salt, preferably a water soluble inorganic metal salt.

12. The method according to claim 11, wherein the water soluble salt comprises a cation selected from the group consisting of $Na^+$, $K^+$, $Li^+$, $Sr^{2+}$, $Ca^{2+}$, $Cu^{2+}$, $Ni^{2+}$, $Mg^{2+}$, $Zn^{2+}$, $Ba^{2+}$, $Al^{3+}$, $Fe^{3+}$, $Cr^{3+}$, wherein $Na^+$, $K^+$, $Sr^{2+}$, $Zn^{2+}$, $Al^{3+}$ are preferred cations.

13. The method according to any one of claims 11 and 12, wherein the water soluble metal salt comprises an anion selected from the group consisting of $Cl^-$, $NO_3^-$, $I^-$, $Br^-$, $ClO_3^-$ and $CH_3COO^-$.

14. The method according to any one of the preceding claims, wherein the gaseous acid is selected from the group consisting of : hydrogen chloride, hydrogen nitrate, acetic acid, formic acid and lactic acid.

15. The method according to any one of the claims 1-12, wherein the at least partial acidification is performed by subjecting the recording substrate to a plasma treatment, the plasma treatment, preferably an atmospheric air plasma treatment.

**Patentansprüche**

1. Verfahren zum Bedrucken eines Aufzeichnungssubstrats mit einer wässrigen Tinte; wobei die wässrige Tintenzusammensetzung Partikel eines wasserlöslichen Färbemittels enthält und einen pH zwischen 8 und 12 hat, welches Verfahren die folgenden Schritte aufweist:

   a) Vorbehandeln des Aufzeichnungssubstrats durch zumindest teilweise Versauerung des Aufzeichnungssubstrats, wobei die zumindest teilweise Versauerung ausgeführt wird, indem man das Aufzeichnungssubstrat einer gasförmigen Säure aussetzt oder das Aufzeichnungssubstrat einer Plasmabehandlung aussetzt;
   b) bildmäßiges Aufdrucken der Tintenzusammensetzung auf das vorbehandelte Aufzeichnungssubstrat.

2. Verfahren nach Anspruch 1, bei dem das Aufzeichnungssubstrat eine zumindest teilweise poröse Struktur aufweist.

3. Verfahren nach einem der vorstehenden Ansprüche, bei dem das Aufzeichnungssubstrat ausgewählt ist aus der Gruppe bestehend aus Normalpapier, maschinenbeschichteten Papieren und glanzbeschichteten Papieren.

4. Verfahren nach einem der vorstehenden Ansprüche, bei dem die wässrige Tinte Partikel eines in Wasser dispergierbaren Polymers enthält.

5. Verfahren nach einem der vorstehenden Ansprüche, bei dem die wässrige Tintenzusammensetzung ein wasserlösliches organisches Lösungsmittel enthält.

6. Verfahren nach einem der vorstehenden Ansprüche, bei dem die Tintenzusammensetzung einen pH zwischen 8,5 und 11,5, vorzugsweise zwischen 9 und 11 hat.

7. Verfahren nach einem der vorstehenden Ansprüche, bei dem die Tinte bei einem pH zwischen 8 und 12 gepuffert ist.

8. Verfahren nach Anspruch 7, bei dem die wässrige Tintenzusammensetzung durch eine schwache organische Base gepuffert ist, die in der Tintenzusammensetzung enthalten ist.

9. Verfahren nach einem der vorstehenden Ansprüche, bei dem die wässrige Tintenzusammensetzung ein organisches Amin enthält.

**10.** Verfahren nach Anspruch 9, bei dem das organische Amin ausgewählt ist aus der Gruppe bestehend aus Ammonia, Alkylaminen und Alkanolaminen.

**11.** Verfahren nach einem der vorstehenden Ansprüche, bei dem die wässrige Tintenzusammensetzung ein wasserlösliches Salz enthält, vorzugsweise ein wasserlösliches anorganisches Metallsalz.

**12.** Verfahren nach Anspruch 11, bei dem das wasserlösliche Salz ein Kation enthält, das ausgewählt ist aus der Gruppe bestehend aus: $Ma^+$, $K^+$, $Li^+$, $Sr^{2+}$, $Ca^{2+}$, $Cu^{2+}$, $Ni^{2+}$, $Mg^{2+}$, $Zn^{2+}$, $Ba^{2+}$, $Al^{3+}$, $Fe^{3+}$, $Cr^{3+}$, wobei $Na^+$, $K^+$, $Sr^{2+}$, $Zn^{2+}$, $Al^{3+}$ bevorzugte Kationen sind.

**13.** Verfahren nach einem der Ansprüche 11 und 12, bei dem das wasserlösliche Metallsalz ein Anion enthält, das ausgewählt ist aus der Gruppe bestehend aus $Cl^-$, $NO_3^-$, $I^-$, $Br^-$, $ClO_3^-$ und $CH_3COO^-$.

**14.** Verfahren nach einem der vorstehenden Ansprüche, bei dem die gasförmige Säure ausgewählt ist aus der Gruppe bestehend aus: Chlorwasserstoff, Hydrogennitrat, Essigsäure, Ameisensäure und Milchsäure.

**15.** Verfahren nach einem der Ansprüche 1 bis 12, bei dem die zumindest teilweise Versauerung ausgeführt wird, indem man das Aufzeichnungssubstrat einer Plasmabehandlung unterzieht, wobei die Plasmabehandlung vorzugsweise eine atmosphärische Luftplasmabehandlung ist.

## Revendications

**1.** Procédé d'impression d'une encre aqueuse sur un substrat d'enregistrement ; la composition d'encre aqueuse comprend des particules d'un colorant dispersible dans l'eau et a un pH entre 8 et 12 ; le procédé comprenant les étapes de :

a) prétraitement du substrat d'enregistrement par acidification au moins partielle du substrat d'enregistrement, l'acidification au moins partielle étant effectuée en soumettant le substrat d'enregistrement à un acide gazeux ou en soumettant le substrat d'enregistrement à un traitement au plasma ;
b) impression suivant une image de la composition d'encre sur le substrat d'enregistrement prétraité.

**2.** Procédé selon la revendication 1, dans lequel le substrat d'enregistrement comprend une structure au moins en partie poreuse.

**3.** Procédé selon l'une quelconque des revendications précédentes, dans lequel le substrat d'enregistrement est sélectionné à partir du groupe constitué par des papiers unis, des papiers couchés machine et des papiers couchés brillants.

**4.** Procédé selon l'une quelconque des revendications précédentes, dans lequel l'encre aqueuse comprend des particules d'un polymère dispersible dans l'eau.

**5.** Procédé selon l'une quelconque des revendications précédentes, dans lequel la composition d'encre aqueuse comprend un solvant organique soluble dans l'eau.

**6.** Procédé selon l'une quelconque des revendications précédentes, dans lequel la composition d'encre a un pH entre 8,5 et 11,5, de préférence entre 9 et 11.

**7.** Procédé selon l'une quelconque des revendications précédentes, dans lequel l'encre est mise en tampon à un pH entre 8 et 12.

**8.** Procédé selon la revendication 7, dans lequel la composition d'encre aqueuse est mise en tampon par une base organique faible comprise dans la composition d'encre.

**9.** Procédé selon l'une quelconque des revendications précédentes, dans lequel la composition d'encre aqueuse comprend une amine organique.

**10.** Procédé selon la revendication 9, dans lequel l'amine organique est sélectionnée à partir du groupe constitué par de l'ammoniac, des alkylamines et des alkanolamines.

11. Procédé selon l'une quelconque des revendications précédentes, dans lequel la composition d'encre aqueuse comprend un sel soluble dans l'eau, de préférence un sel de métal inorganique soluble dans l'eau.

12. Procédé selon la revendication 11, dans lequel le sel soluble dans l'eau comprend un cation sélectionné à partir du groupe constitué par $Na^+$, $K^+$, $Li^+$, $Sr^{2+}$, $Ca^{2+}$, $Cu^{2+}$, $Ni^{2+}$, $Mg^{2+}$, $Zn^{2+}$, $Ba^{2+}$, $Al^{3+}$, $Fe^{3+}$, $Cr^{3+}$, dans lesquels $Na^+$, $K^+$, $Sr^{2+}$, $Zn^{2+}$, $Al^{3+}$ sont des cations préférés.

13. Procédé selon l'une quelconque des revendications 11 et 12, dans lequel le sel de métal soluble dans l'eau comprend un anion sélectionné à partir du groupe constitué par $Cl^-$, $NO_3^-$, $I^-$, $Br^-$, $ClO_3^-$ et $CH_3COO^-$.

14. Procédé selon l'une quelconque des revendications précédentes, dans lequel l'acide gazeux est sélectionné à partir du groupe constitué par du : chlorure d'hydrogène, nitrate d'hydrogène, acide acétique, acide formique et acide lactique.

15. Procédé selon l'une quelconque des revendications 1 à 12, dans lequel l'acidification au moins partielle est effectuée en soumettant le substrat d'enregistrement à un traitement au plasma, le traitement de plasma étant de préférence un traitement au plasma à air atmosphérique.

EP 2 988 946 B1

**Fig. 1**

**Fig. 2A**

20

**Fig. 2B**

**Fig. 2C**

**Fig. 3**

**Fig. 4**

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011021591 A
- EP 2233309 A2
- US 7172275 B
- EP 2227075 A1
- JP 2000053897 A
- JP 2001139849 A